# EUROPEAN PATENT APPLICATION

(11) **EP 4 046 875 A1**
(43) Date of publication of application: **24.08.2022**
(21) Application number: 21158129.3
(22) Date of filing: 19.02.2021
(51) Int. Cl.: B60R 13/08

(54) **A NOISE SHIELD ARRANGEMENT COMPRISING A THERMALLY CONDUCTIVE ELEMENT**

(71) Applicant: VOLVO TRUCK CORPORATION, 405 08 Göteborg (SE)
(72) Inventor: PRESEZNIAK, Flavio Augusto, 41255 GÖTEBORG (SE); LUVÖ, Sofia, 44360 STENKULLEN (SE)
(74) Representative: Kransell & Wennborg KB

(57) **Abstract**

The present disclosure relates to noise shield arrangement (100) for a vehicle, the noise shield arrangement comprising a noise shield structure (102) arranged to, at least partly, encapsulate a sound generating structure (200) of the vehicle, wherein the noise shield structure is formed by an acoustic isolating material and comprises a first surface (104) arranged to face the sound generating structure, and a second, oppositely positioned surface (106) arranged to face away from the sound generating structure, wherein the noise shield arrangement comprises at least one thermally conductive element (110) extending through the noise shield structure (102) between the first surface (104) and the second surface (106).

## Description

### TECHNICAL FIELD

The present disclosure relates to a noise shield arrangement for a vehicle. The disclosure also relates to a vehicle comprising such a noise shield arrangement. The noise shield arrangement is applicable on vehicles, in particularly heavy duty vehicle such as trucks. Although the following will mainly describe the noise shield arrangement in relation to a truck, it can also be applicable for other type of vehicles comprising a sound and heat generating structure.

### BACKGROUND

Vehicles conventionally comprises a plurality of structural components, where some of the structural components are generating sound. These structural components can thus be referred to as sound generating structures. Examples of such sound generating structures can be, for example, a prime mover, such as an internal combustion engine or an electric motor, a pump, a compressor, a turbine, etc.

In order to reduce noise to the ambient environment as well as into the cabin occupied by the vehicle driver and passengers, a noise shield is conventionally arranged in the vicinity of the sound generating structure. Hereby, the sound level outside the compartment occupied by the sound generating structure is reduced.

A problem with conventional noise shields is that they also prevent heat from leaving the noise generating structure. Thus, to be able to sufficiently cool the sound generating structure, noise leakage must be increased. Hence, the conventional noise shield is either leaking too mush noise or are preventing sufficient cooling.

### SUMMARY

It is an object of the present disclosure to provide a noise shield arrangement which that at least partly overcomes the above described deficiencies. This object is achieved by a noise shield arrangement according to claim 1.

According to a first aspect, there is provided a noise shield arrangement for a vehicle, the noise shield arrangement comprising a noise shield structure arranged to, at least partly, encapsulate a sound generating structure of the vehicle, wherein the noise shield structure is formed by an acoustic isolating material and comprises a first surface arranged to face the sound generating structure, and a second, oppositely positioned surface arranged to face away from the sound generating structure, wherein the noise shield arrangement comprises at least one thermally conductive element extending through the noise shield structure between the first surface and the second surface.

The wording "thermally conductive elements" should be construed as an element able to transfer heat through the noise shield in a sufficient manner, i.e. rapidly and without leaking too much heat to the environment when transferred through the element. According to an example embodiment, the thermally conductive element may be a thermally conductive pipe. The thermally conductive pipe thus absorbs heat and transfer the heat through the noise shield.

Moreover, the acoustic isolating material of the noise shield structure is preferably a material blocking noise as well being heat resistive. According to non-limiting examples, the acoustic isolating material may comprise natural or artificial fibers, a foam or microperforated surface(s). As the noise shield structure is arranged in the vicinity of a relatively warm sound generating structure, the acoustic isolating material should be able to both block noise and be able to be heated to a predetermined temperature level.

As will be described in further detail below, the sound generating structure should be construed as a device/arrangement of the vehicle which generates sound during operation of the vehicle. According to an example embodiment, the sound generating structure may be at least one of a vehicle engine, an air compressor, or a pump. Other sound generating structures are of course also conceivable, such as an exhaust gas pipe, etc.

An advantage is that by arranging the thermally conductive element to extend out through the noise shield as described above, the heat generated by the sound generating structure can be rapidly transferred to a suitable position, either to a heat consumer of the vehicle or out to the ambient environment in the vicinity of the vehicle. Hence, according to an example embodiment, the heat conductive element may be arranged and configured to extend to a heat consumer of the vehicle.

According to an example embodiment, the thermally conductive element may be a heat pipe. A heat pipe is advantageous as it can rapidly direct heat from one position to another. Hereby, the heat generated by the sound generating structure is rapidly directed through the noise shield, whereby the risk of overheating the sound generating structure is reduced.

A heat pipe can be arranged in various configuration, of which a particular one is described below. In particular and preferably, the heat pipe comprises a hot interface side and a cold interface side, where the hot interface side is arranged at the first surface of the noise shield and the cold interface side is arranged on the opposite side of the heat pipe. The heat generated by the sound generating structure thus travels from the hot interface side towards the cold interface side. An advantage of a heat pipe is that it can direct heat to substantially any position outside the noise shield and is hence not dependent on e.g. gravity to function.

According to an example embodiment, the heat pipe may comprise a sealed inner cavity and a casing enclosing the inner cavity to form an encapsulated volume between the inner cavity and the casing, wherein the encapsulated volume comprises a liquid fluid. At the hot interface side of a heat pipe, the liquid fluid, which is in contact with a thermally conductive solid surface, hereby turns into a vapor by absorbing heat from the thermally conductive solid surface. The vapor travels along the heat pipe to the cold interface side and condenses back into a liquid, whereby the heat is released at a suitable position outside the noise shield. The liquid thereafter returns to the hot interface side through either capillary action or centrifugal force, etc., and the cycle repeats. Due to the high heat transfer coefficients for boiling and condensation, the heat pipe is a highly effective thermal conductor. The effective thermal conductivity varies with the length of the heat pipe. As a non-limiting example, the thermal conductivity can be e.g. 100 kW/(m·K) for long heat pipes, in comparison with approximately 0.4 kW/(m·K) for a copper pipe of same length.

According to an example embodiment, the thermally conductive element may be a thermosyphon. A thermosyphon relies on gravity to function in a proper manner, and according to a non-limiting example, a liquid working fluid is vaporized by the heat generated by the sound generated structure at the bottom of the heat pipe. The vapor travels to a condenser at the top of the heat pipe, where it condenses. The liquid then drains back to the bottom of the heat pipe by gravity, and the cycle repeats. A thermosyphon is thus advantageously used when the noise shield is positioned vertically below the heat consumer in need of receiving heat.

According to an example embodiment, the thermally conductive element may protrude a non-zero distance out from the second surface. Hereby, the thermally conductive element is able to direct the heat to a specific position.

According to an example embodiment, the thermally conductive element may comprise an angled portion arranged at the non-zero distance from the second surface. According to an example embodiment, the angled portion may have an angle of at least 45 degrees relative to the portion extending through the noise shield structure. An advantage of the angled portion is that the heat can be directed to a desired position which is arranged at an angle from the noise shield. Also, the thermally conductive element can be routed to bypass other components/structures of the vehicle.

According to an example embodiment, the noise shield arrangement may comprise a plurality of thermally conductive elements.

According to an example embodiment, the noise shield structure may comprise a first noise shield portion and a second noise shield portion connected to the first noise shield portion, the thermally conductive element forming part of the first noise shield portion. Hereby, the noise shield arrangement can be designed as a larger noise shield, which can be composed of different parts comprising only a sufficient number of thermally conductive elements.

According to an example embodiment, the first and second noise shield portions may be formed by different acoustic isolating materials.

According to a second aspect, there is provided a vehicle, comprising a sound generating structure and a noise shield arrangement according to any one of the above described embodiments, wherein the noise shield arrangement comprises a noise shield structure at least partially enclosing the sound generating structure.

According to an example embodiment, the vehicle comprises a heat consumer, wherein the thermally conductive element extends from the noise shield structure to the heat consumer.

Hereby, the heat is removed from the structure in need of cooling and provided to the heat consumer in need of heating.

Further effects and features of the second aspect are largely analogous to those described above in relation to the first aspect.

Further features of, and advantages with, the present disclosure will become apparent when studying the appended claims and the following description. The skilled person will realize that different features of the present disclosure may be combined to create embodiments other than those described in the following, without departing from the scope defined by the claims.

### BRIEF DESCRIPTION OF THE DRAWINGS

The above, as well as additional objects, features, and advantages of the present disclosure, will be better understood through the following illustrative and non-limiting detailed description of exemplary embodiments, wherein:
Fig. 1 is a lateral side view of a vehicle according to an example embodiment,
Fig. 2 is a schematic illustration of a noise shield arrangement according to an example embodiment,
Fig. 3 is a schematic illustration of a noise shield arrangement according to another example embodiment, and
Fig. 4 is a schematic illustration of a thermally conductive element according to an example embodiment.

### DETAIL DESCRIPTION

The present disclosure will now be described more fully hereinafter with reference to the accompanying drawings, in which exemplary embodiments are shown. The disclosure may, however, be embodied in many different forms and should not be construed as limited to the embodiments set forth herein; rather, these embodiments are provided for thoroughness and completeness. Like reference character refer to like elements throughout the description.

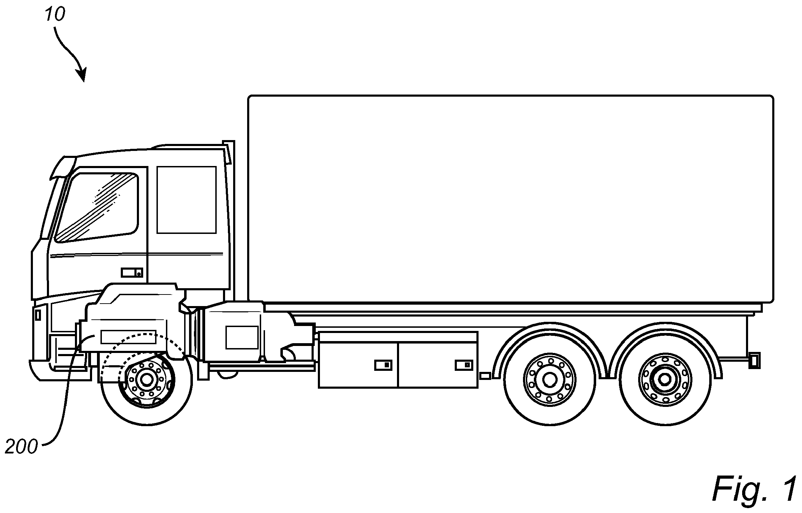

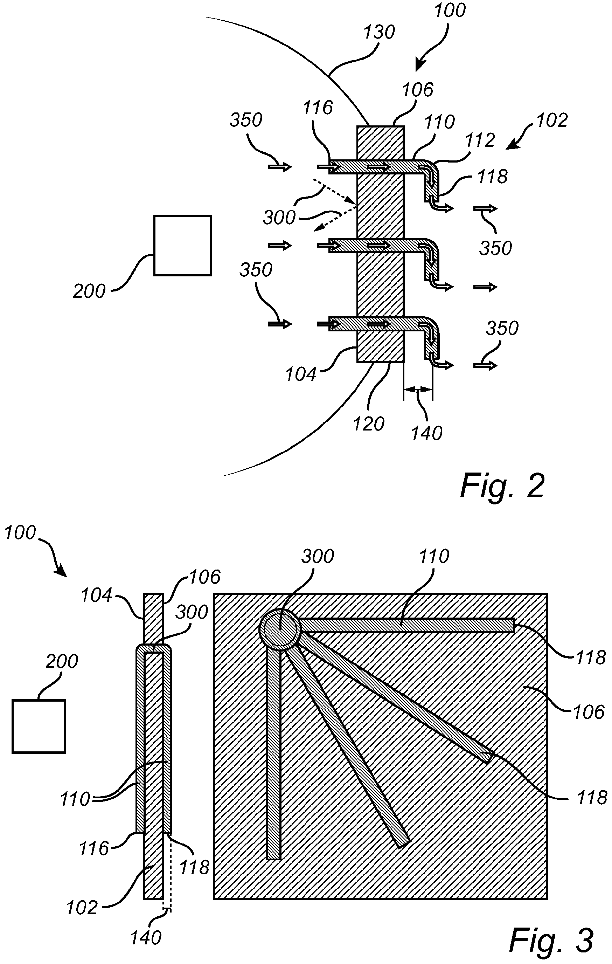

With reference to Fig. 1, which is lateral side view of a vehicle 10 according to an example embodiment. The vehicle 10 is in Fig. 1 illustrated in the form of a truck, but the noise shield arrangement described below in relation to Figs. 2 - 4 is applicable for other vehicles as well, such as a bus, a working machine, a car, etc. The vehicle 10 comprises a plurality of sound generating structures 200. In Fig. 1, the sound generating structure 200 is illustrated by the internal combustion engine of the vehicle. Other sound generating structures may, for example, be a compressor, a pump, an electric motor, etc.

In order to describe the noise shield arrangement in further detail, reference is made to Figs. 2 - 3 which illustrate noise shield arrangements 100 according to example embodiments. Starting with Fig. 2, the noise shield arrangement 100 comprises a noise shield structure 102 which at least partially encapsulates the sound generating structure 200. The noise shield structure 102 comprises a first noise shield portion 120 formed by an acoustic isolating material. Optionally, and as indicated in Fig. 2, the noise shield structure 102 comprises a second noise shield portion 130 formed by a different acoustic isolating material compared to the first noise shield portion 120, whereby the first 120 and second 130 noise shield portions are connected to each other to properly prevent noise from being directed out to the environment. Although Fig. 2 illustrates two different noise shield portions, it should be understood that the present disclosure is applicable by using only the first noise shield portion 120, i.e. the first 120 and second 130 noise shield portions may be formed by the same material. As is illustrated in Fig. 2, the noise 300 generated by the sound generated structure 200 is schematically illustrated as prevented from being directed out from the noise shield structure 102.

Furthermore, the noise shield structure 102 comprises a first surface 104 facing the sound generating structure 200, and a second surface 106 arranged on an opposite side of the noise shield structure 102 compared to the first surface 104. Hence, the second surface 106 faces away from the sound generating structure 200.

Moreover, the noise shield arrangement 100 further comprises a plurality of thermally conductive elements 110, in the following exemplified and referred to as thermally conductive pipes 110. As can be seen in Fig. 2, the thermally conductive pipes 110 extend through the noise shield structure 102 between the first 104 and second 106 surfaces. In the example embodiment depicted in Fig. 2, the thermally conductive pipes 110 protrude a non-zero distance 140 out from the second surface 106. As can be seen by the arrows indicated with reference numeral 350, heat generated by the heat generating structure 200 is absorbed by a hot interface side 116 of the thermally conductive pipes 110 and transferred through the thermally conductive pipes 110 to a cold interface side 118. The hot interface side 116 is thus formed at a first end portion of the thermally conductive pipes 110 positioned on the same side as the first surface of the noise shield structure 102, and the cold interface side 118 is formed at a second end portion of the thermally conductive pipes 110 positioned at the non-zero distance 140 from the second surface 106. Hence, heat is directed from the encapsulated volume containing the sound generating structure 200 and directed through the noise shield structure 102 by means of the thermally conductive pipes 110 to a position arranged at a distance from the second surface 106.

According to the example depicted in Fig. 2, the thermally conductive pipes 110 comprises an angled portion 112 at the non-zero distance 140 from the second surface. Hereby, the heat 350 transferred through the thermally conductive pipes 110 can be directed to a suitable position outside the encapsulated volume and routed to bypass other components of the vehicle.

Turning now to Fig. 3 illustrating another example embodiment of the noise shield arrangement 100. In Fig. 3, a cross-section of the noise shield structure 102 is depicted, as well as a view towards the second surface 106.

In the example embodiment depicted in Fig. 3, the noise shield arrangement 100 also comprises a plurality of thermally conductive pipes 110. However, in Fig. 3, the plurality of thermally conductive pipes 110 are united in a single passage 300 through the noise shield structure 102. In the example of Fig. 3, three thermally conductive pipes 110 are arranged at the first surface 104 facing the sound generating structure 200. These three thermally conductive pipes 110 merge into a single thermally conductive pipe extending from the first surface 104 to the second surface 106 of the noise shield structure 102. At the second surface 106, the single thermally conductive pipe is split into three thermally conductive pipes 110 which protrudes the non-zero distance 140 out from the second surface 106. Fig. 3 depicts that the heat is released in the vicinity of the second surface 106 but it should be readily understood that the plurality of thermally conductive pipes 110 extending out from the second surface 106 can be routed to a suitable position in a similar vein as described above, such as e.g. to a heat consumer of the vehicle.

As can be seen in Fig. 3, the thermally conductive pipes 110 extending out from the second surface 106 can be arranged in different directions to guide heat to various positions. Also, by providing a single passage through the noise shield structure 102, the noise shield structure can be preserved in its original configuration. Also, a single passage 300 may improve the ability to block noise from being directed through the noise shield structure 102.

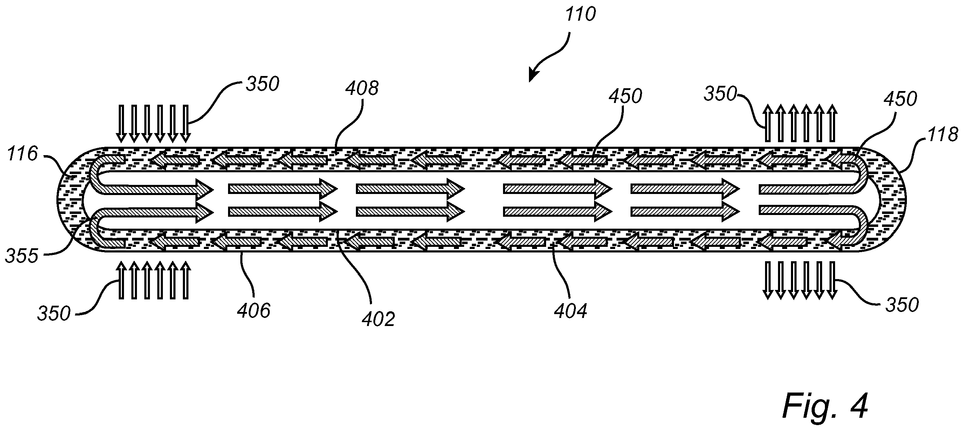

The thermally conductive pipes 110 are preferably heat pipes. Reference is therefore made to Fig. 4 which illustrates a heat pipe according to an example embodiment. As is illustrated in Fig. 4, the heat pipe 110 comprises a sealed inner cavity 402 and a casing 406 enclosing the inner cavity 402. Hereby, an encapsulated volume 404 is formed between the inner cavity 402 and the casing 406. Furthermore, the encapsulated volume 404 comprises a liquid fluid 408. The heat pipe comprises the above described hot interface side 116 facing the sound generating structure 200, and the cold interface side 118. When the sound generating structure generates heat during operation, the heat is absorbed by the hot interface side and turned into vapor 355. The vapor 355 travels along the heat pipe 110 to the cold interface side 118 where it condenses back into a liquid 450 and the heat 350 is released at a suitable position outside the noise shield at the cold side interface 118. The liquid 450 thereafter returns to the hot interface side 116 through either capillary action or centrifugal force, and the cycle repeats, i.e. the liquid 355 once again turns into vapor.

It is to be understood that the present disclosure is not limited to the embodiments described above and illustrated in the drawings; rather, the skilled person will recognize that many changes and modifications may be made within the scope of the appended claims.

## Claims

1. A noise shield arrangement (100) for a vehicle, the noise shield arrangement comprising a noise shield structure (102) arranged to, at least partly, encapsulate a sound generating structure (200) of the vehicle, wherein the noise shield structure is formed by an acoustic isolating material and comprises a first surface (104) arranged to face the sound generating structure, and a second, oppositely positioned surface (106) arranged to face away from the sound generating structure, wherein the noise shield arrangement comprises at least one thermally conductive element (110) extending through the noise shield structure (102) between the first surface (104) and the second surface (106).

2. The noise shield arrangement according to claim 1, wherein the thermally conductive element is a thermally conductive pipe.

3. The noise shield arrangement according to any one of claims 1 or 2, wherein the thermally conductive element is a heat pipe.

4. The noise shield arrangement according to claim 3, wherein the heat pipe comprises a sealed inner cavity and a casing enclosing the inner cavity to form an encapsulated volume between the inner cavity and the casing, wherein the encapsulated volume comprises a liquid fluid.

5. The noise shield arrangement according to any one of claims 1-3, wherein the thermally conductive element is a thermosyphon.

6. The noise shield arrangement according to any one of the preceding claims, wherein the thermally conductive element protrudes a non-zero distance out from the second surface.

7. The noise shield arrangement according to claim 6, wherein the thermally conductive element comprises an angled portion (112) arranged at the non-zero distance from the second surface.

8. The noise shield arrangement according to claim 7, wherein the angled portion (112) has an angle of at least 45 degrees relative to the portion extending through the noise shield structure.

9. The noise shield arrangement according to any one of the preceding claims, wherein the heat conductive element is arranged and configured to extend to a heat consumer of the vehicle.

10. The noise shield arrangement according to any one of the preceding claims, comprising a plurality of thermally conductive elements.

11. The noise shield arrangement according to any one of the preceding claims, wherein the noise shield structure comprises a first noise shield portion (120) and a second noise shield portion (130) connected to the first noise shield portion, the thermally conductive element forming part of the first noise shield portion.

12. The noise shield arrangement according to claim 11, wherein the first and second noise shield portions are formed by different acoustic isolating materials.

13. A vehicle, comprising a sound generating structure and a noise shield arrangement according to any one of the preceding claims, wherein the noise shield arrangement comprises a noise shield structure at least partially enclosing the sound generating structure.

14. The vehicle according to claim 13, wherein the sound generating structure is at least one of a vehicle engine, an air compressor, or a pump.

15. The vehicle according to any one of claims 13 or 14, wherein the vehicle comprises a heat consumer, wherein the thermally conductive element extends from the noise shield structure to the heat consumer.
